# EUROPÄISCHE PATENTSCHRIFT

(11) **EP 1 012 026 B1**
(45) Veröffentlichungstag und Bekanntmachung des Hinweises auf die Patenterteilung: **26.09.2001**
(21) Anmeldenummer: 98946352.6
(22) Anmeldetag: 17.08.1998
(51) Int. Cl.: B62D 5/06, B62D 7/22

(54) **SERVOLENKUNG FÜR NICHT SPURGEBUNDENE KRAFTFAHRZEUGE**
POWER STEERING FOR NON-RAILBORNE MOTOR VEHICLES
DIRECTION ASSISTEE POUR AUTOMOBILES NON GUIDEES

(30) Priorität: 12.09.1997 DE 19740140
(43) Veröffentlichungstag der Anmeldung: 28.06.2000
(73) Patentinhaber: DaimlerChrysler AG, 70567 Stuttgart (DE)
(72) Erfinder: CAKMAZ, Aydogan, D-70374 Stuttgart (DE); DINKEL, Harald, D-71272 Renningen (DE)
(86) Internationale Anmeldenummer: EP9805196
(87) Internationale Veröffentlichungsnummer: WO9914097

(56) Entgegenhaltungen:
- DE-A- 4 446 123
- US-A- 5 136 929

## Beschreibung

Die Erfindung betrifft eine Servolenkung für nicht spurgebundene Kraftfahrzeuge, mit
- einer Lenkhandhabe, insbesondere Lenkhandrad,
- damit zur Lenkverstellung gekoppelten gelenkten Fahrzeugrädern,
- einem mit den gelenkten Fahrzeugrädern zwangsgekoppelten, doppelwirkenden, hydrostatischen Servomotor, insbesondere Kolben-Zylinder-Aggregat,
- einem relativ drucklosen Hydraulikreservoir,
- einer hydraulischen Druckquelle und
- einer den Servomotor steuernden Servoventilanordnung, welche einen mit der hydraulischen Druckquelle verbundenen Druckanschluß, einen mit dem Hydraulikreservoir verbundenen Niederdruckanschluß sowie zwei mit jeweils einer Seite des Servomotors verbundene Motoranschlüsse aufweist und in Abhängigkeit von Relativverstellungen zwischen der Lenkhandhabe und den gelenkten Fahrzeugrädern bzw. in Abhängigkeit von zwischen der Lenkhandhabe und den gelenkten Fahrzeugrädern übertragenen Lenkkräften aus einer Normallage, in der die Motoranschlüsse drucklos bzw. mit dem Hydraulikreservoir verbunden sind, verstellt wird, um zwischen den Motoranschlüssen eine Druckdifferenz herzustellen, welche den Servomotor zur Erzeugung einer das jeweilige Lenkmanöver unterstützenden Servokraft beaufschlagt,
- jeweils einer steuerbaren Drossel zwischen jedem Motoranschluß und der daran angeschlossenen Seite des Servomotors.

Derartige Servolenkungen sind bekannt, vgl. beispielsweise die DE 44 46 123 A1, und werden serienmäßig in Kraftfahrzeugen eingebaut. Dabei ist das regelmäßig als Lenkhandhabe vorgesehene Lenkhandrad mit den gelenkten Fahrzeugrädern über einen mechanischen Durchtrieb zwangsgekoppelt, welcher eine gewisse Elastizität aufweist, derart, daß zwei zur Übertragung von Kräften bzw. Momenten zwischen Lenkhandrad und gelenkten Fahrzeugrädern dienende Übertragungselemente gegen Rückstellkraft eine begrenzte Verstellung relativ zueinander ausführen können. In Abhängigkeit von dieser Relativverstellung wird die Servoventilanordnung betätigt, derart, daß der Servomotor die gewünschte Servokraft erzeugt.

Hier erfolgt die Betätigung des Servoventiles also einerseits analog zur Relativverstellung der die Kräfte bzw. Momente zwischen Lenkhandrad und gelenkten Fahrzeugrädern übertragenden Elemente und andererseits analog zum Maß der übertragenen Kräfte und Momente.

Grundsätzlich ist es auch möglich, in Kraftfahrzeugen Lenkungen ohne mechanischen Durchtrieb zwischen Lenkhandhabe und gelenkten Fahrzeugrädern einzusetzen. In diesem Falle kann beispielsweise eine Regelstrecke die Servoventilanordnung in Abhängigkeit von einer Soll-Istwert-Differenz zwischen dem mittels der Lenkhandhabe vorgegebenen Lenkwinkel und dem an den gelenkten Fahrzeugrädern tatsächlich vorliegenden Lenkwinkel und damit rein wegabhängig steuern. Im Ergebnis wird damit bewirkt, daß der Servomotor die gelenkten Fahrzeugräder entsprechend der Vorgabe durch die Lenkhandhabe betätigt.

Bei allen Fahrzeuglenkungen besteht die Möglichkeit, Rückstellorgane anzuordnen, die die Lenkung in die Geradeausstellung zu drängen suchen. Nach der DE 39 18 986 A1 können dazu beispielsweise Federaggregate vorgesehen sein.

Im Hinblick auf einen erhöhten Komfort sind Fahrzeuglenkungen meistens mit Lenkungsdämpfern ausgerüstet, durch die die Wirkung von Stößen auf die gelenkten Fahrzeugräder gemindert und damit auch das Lenkhandrad stoßfrei gehalten wird. Die Funktion des Lenkungsdämpfers kann vom Servomotor übernommen werden, wenn die Verbindungen zwischen den Motoränschlüssen des Servoventiles und dem Servomotor mit Dämpfungsventilen bestückt sind.

Aufgabe der Erfindung ist es nun, eine neue vorteilhafte Konstruktion für eine Servolenkung der eingangs angegebenen Art aufzuzeigen.

Diese Aufgabe wird erfindungsgemäß dadurch gelöst, daß die steuerbaren Drosseln bei Betriebszuständen, in denen die Servoventilanordnung zur Erzeugung der Druckdifferenz zwischen den Motoranschlüssen verstellt wird, aus ihrem sonst eingenommenen drosselwirksamen Zustand in einen relativ drosselunwirksamen Zustand umgeschaltet wird, und daß ein Rückstellventil vorgesehen ist, welches bei Verlassen der Geradeausstellung der Lenkung einen hydraulischen Strom zu derjenigen Seite des Servomotors freigibt, auf der bei hydraulischer Druckbeaufschlagung eine Stellkraft in Richtung der Geradeausstellung auftritt.

Die Erfindung beruht auf dem allgemeinen Gedanken, den Servomotor sowohl für eine Lenkungsdämpfung als auch zur Erzeugung einer Rückstellkraft heranzuziehen, wenn die Lenkung eine von der Geradeausstellung abweichende Stellung und die Servoventilanordnung ihre Normallage einnehmen.

Zu diesem Zweck wird im Lenksystem bei Verlassen der Geradeausstellung mittels des Rückstellventils ein Hydraulikstrom zu derjenigen Seite des Servomotors freigegeben, welcher bei einer Rückstellung in die Geradeauslage Hydraulikmedium aufnimmt. Dieser Hydraulikstrom wird je nach Stellung der vorgenannten Seite des Servomotors zugeordneten steuerbaren Drossel in unterschiedlicher Weise wirksam: Solange die Servoventilanordnung aufgrund einer entsprechenden Handkraft an der Lenkhandhabe eine von ihrer Normallage abweichende Lage einnimmt, sind die steuerbaren Drosseln in ihrem drosselunwirksamen Zustand, mit der Folge, daß der vorgenannte Hydraulikstrom im wesentlichen wirkungslos über das Servoventil zum Hydraulikreservoir abströmen kann. Wenn dagegen die Servoventilanordnung ihre Normallage einnimmt, sind die steuerbaren Drosseln drosselwirksam, mit der Folge, daß der vorgenannte Hydraulikstrom an der vorgenannten Seite des Servomotors nur gedrosselt abströmen kann und dementsprechend einen mehr oder weniger großen hydraulischen Druck erzeugt, der vom Servomotor in eine Rückstellkraft in Richtung der Geradeausstellung der Lenkung umgesetzt wird.

Ein Vorteil der Erfindung liegt darin, daß der Servomotor in Verbindung mit den steuerbaren Drosseln automatisch die Funktion eines Lenkungsdämpfers übernimmt, sobald die Drosseln drosselwirksam werden.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen erläutert werden.

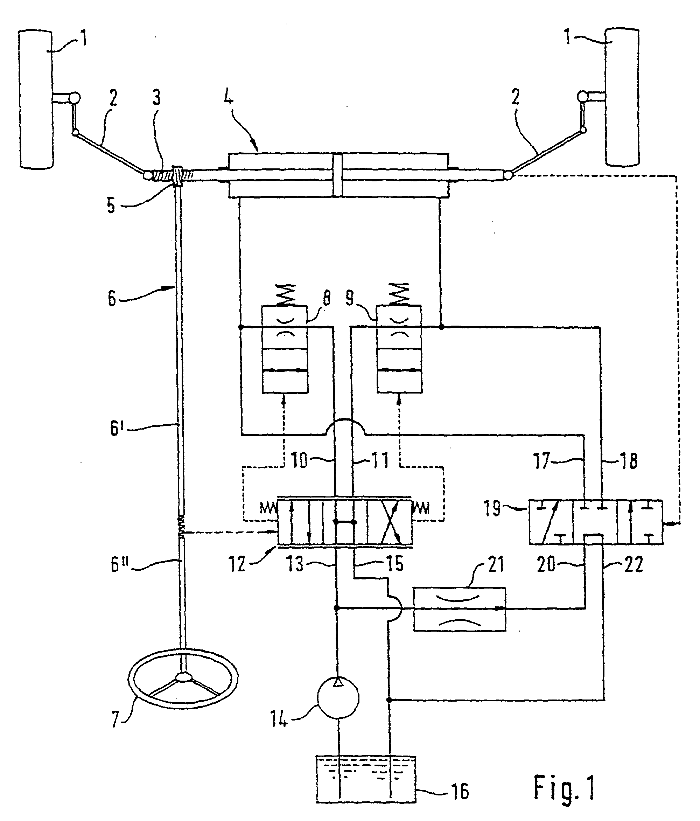

Dabei zeigen die Fig. 1 bis 3 in schaltplanartiger Darstellung besonders vorteilhafte Varianten für die Realisierung der Erfindung.

Gemäß Fig. 1 besitzt ein nicht näher dargestelltes Kraftfahrzeug eine (vordere) Achse mit gelenkten Rädern 1, die über Spurstangen 2 zur gemeinsamen Lenkverstellung mit einer Zahnstange 3 gekoppelt sind, welche im dargestellten Beispiel als Teil der Kolbenstange eines als hydrostatischer Servomotor 4 angeordneten doppeltwirkenden Kolben-Zylinder-Aggregates ausgebildet ist. Die Zahnstange 3 kämmt mit einem Ritzel 5, welches über eine Lenkwelle 6 antriebsmäßig mit einem Lenkhandrad 7 verbunden ist. Drehverstellungen des Lenkhandrades 7 führen also zu einer Lenkverstellung der Räder 1 und umgekehrt.

Die beiden Seiten des Servomotors 4 sind über steuerbare Drosselventile 8 und 9, die aus ihrer dargestellten drosselwirksamen Stellung in eine relativ drosselunwirksame Stellung umgesteuert werden können, mit Motoranschlüssen 10 und 11 einer im Prinzip nach Art eines 3/4-Proportionalventiles ausgebildeten Servoventilanordnung 12 verbunden, welche über einen Druckanschluß 13 mit der Druckseite einer Hydraulikpumpe 14 und über einen Niederdruckanschluß 15 mit einem relativ drucklosen Hydraulikreservoir 16 verbunden ist, an das auch die Saugseite der Hydraulikpumpe 14 angeschlossen ist.

Die beiden Seiten des Servomotors 4 sind des weiteren direkt mit Motoranschlüssen 17 und 18 eines als 3/4-Ventil ausgebildeten Rückstellventiles 19 verbunden, welches über einen Eingang 20 mit dem Ausgang eines eingangsseitig an die Druckseite der Hydraulikpumpe 14 angeschlossenen Stromregelventiles 1 und über einen Ausgang 22 mit dem Hydraulikreservoir 16 verbunden ist.

Das in Fig. 1 dargestellte Lenksystem funktioniert wie folgt:

Wenn bei einer Geradeausfahrt des Fahrzeuges keinerlei Handkräfte oder allenfalls nur sehr geringe Handkräfte notwendig sind, nehmen alle Ventile 8,9,12 und 19 die in Fig. 1 dargestellten Zustände ein.

An der Servoventilanordnung 12 sind also die Motoranschlüsse 10 und 11 sowie der Druck- und der Niederdruckanschluß 13 und 15 miteinander verbunden, so daß die Servopumpe 14 in weitgehend drucklosem Umlauf arbeitet und an den Motoranschlüssen 10 und 11 gleiche (geringe) Hydraulikdrücke vorliegen. Da die Motoranschlüsse 17 und 18 des Rückstellventiles 19 abgesperrt sind, liegt somit auf beiden Seiten des Servomotors 4 Druckgleichheit vor, d.h. der Servomotor 4 erzeugt keinerlei Stellkräfte. Die Drosselventile 8 und 9 nehmen ihre drosselwirksame Lage ein, so daß auf die Räder 1 von außen einwirkende stoßartige Lenkkräfte, die die Kolbenstange des Servomotors 4 stoßartig zu verschieben suchen, merklich gedämpft werden. Denn ein Austausch von Hydraulikmedium zwischen den beiden Seiten des Servomotors bzw. eine Abfuhr von Hydraulikmedium aus dessen einer Seite und eine Zufuhr zu dessen anderer Seite kann nur über die drosselwirksamen Drosselventile 8 und 9 erfolgen.

Sobald am Lenkhandrad 7 merkliche Handkräfte für Lenkmanöver notwendig sind, wird die Servoventilanordnung 12 in der einen oder anderen Richtung verstellt.

Dies kann in grundsätzlich bekannter Weise dadurch erfolgen, daß zwei Teile, z.B. zwei Lenkwellenteile 6' und 6", in der Lenkverbindung zwischen dem Lenkhandrad 7 und den gelenkten Fahrzeugrädern 1 relativ zueinander begrenzt federbar sind und dementsprechend einen mehr oder weniger großen Relativhub ausführen, wenn zwischen dem Lenkhandrad 7 und den gelenkten Fahrzeugrädern Lenkkräfte übertragen werden. Dieser Relativhub wird zur Verstellung der Servoventilanordnung 12 herangezogen. Wenn in Fig. 1 das Lenkhandrad 7 im Uhrzeigersinn, d.h. nach rechts, gedreht wird und dabei Lenkkräfte überwunden werden müssen, wird die Servoventilanordnung nach rechts verschoben, so daß der Motoranschluß 10 mit dem Druckanschluß 13 und der Motoranschluß 11 mit dem Niederdruckanschluß 15 verbunden sind. Die Verstellung der Servoventilanordnung 12 bewirkt eine Umschaltung der mit der Servoventilanordnung 12 gekoppelten Drosselventile 8 und 9 in deren drosselunwirksame Lagen.

Die Stellung des Rückstellventiles 19 ist mit der Stellung der gelenkten Fahrzeugräder 1 bzw. der damit zwangsgekoppelten Zahnstange 3 gekoppelt.

In der Geradeausstellung der gelenkten Räder 1 nimmt das Rückstellventil 19 die in Fig. 1 dargestellte Lage ein. Wenn die gelenkten Fahrzeugräder 1 nach links eingeschlagen werden, wobei die Zahnstange 3 in Fig. 1 nach rechts bewegt wird, wird auch das Rückstellventil 19 nach rechts verschoben, d.h. der Motoranschluß 18 wird mit dem Eingang 20 verbunden. Wenn die Zahnstange 3 aus der Mittellage der Fig. 1 nach links verschoben wird, d.h. wenn die gelenkten Räder 1 nach rechts einschlagen werden, wird das Rückstellventil 19 nach links verschoben, wobei der Eingang 20 mit dem Motoranschluß 17 verbunden wird.

Es wird nun zunächst der Fall betrachtet, daß das Lenkhandrad 7 in Geradeausstellung der Lenkung entgegen dem Uhrzeigersinn mit einer größeren Handkraft beaufschlagt wird, derart, daß die Servoventilanordnung 12 in Fig. 1 nach rechts in Richtung derjenigen Endlage verschoben wird, in der der Druckanschluß 13 mit dem Motoranschluß 10 und der Motoranschluß 11 mit dem Niederdruckanschluß 15 verbunden sind. Jedoch soll die Lenkung die Geradeausstellung noch nicht verlassen haben.

Somit nimmt das Rückstellvenil 19 die in Fig. 1 dargestellte Lage ein. Aufgrund der vorgenannten Verstellung der Servoventilanordnung 12 gehen beide. Drosselventile 8 und 9 in die drosselunwirksame Stellung über. Die zwischen den Motoranschlüssen 10 und 11 vorliegende Druckdiffernz wird zwischen den beiden Seiten des Servomotors 4 wirksam, welcher dementsprechend eine die Handkraft am Lenkhandrad 7 unterstützende Servokraft erzeugt.

Nun mögen die gelenkten Fahrzeugräder 1 nach links eingeschlagen werden.

Dies hat zur Folge, daß sich die Zähnstange 3 aus der dargestellten Mittellage nach rechts verschiebt und das Rückstellventil 19 in seine nach rechts verschobene Endlage gebracht wird, in der der Eingang 20 mit dem Motoranschluß 18 verbunden ist.

Solange weiterhin am Lenkhandrad 7 eine hinreichend große Handkraft entgegen dem Uhrzeigersinn wirksam ist und die Servoventilanordnung 12 dementsprechend ihre nach rechts verschobene Lage einnimmt, nehmen die Drosselventile 8 und 9 ihre drosselunwirksame Lage ein, mit der Folge, daß der zum Rückstellventil 19 geleitete Hydraulikstrom, welcher aufgrund der vorgenannten Stellung dieses Ventiles 19 vom Eingang 20 zum Aufgang 18 geleitet wird, über das geöffnete Drosselventil 9 und den mit dem Niederdruckanschluß 15 der Servoventilanordnung 12 verbundenen Motoranschluß 11 zum Reservoir 16 abströmt und damit wirkungslos bleibt.

Nun möge die Handkraft am Lenkhandrad 7 bei noch nach links eingeschlagener Lenkung auf einen verschwindenden Wert vermindert werden.

Damit wird das Servoventil 12 in die in Fig. 1 dargestellte Mittellage gebracht, während das analog zur Stellung der gelenkten Fahrzeugeräder 1 betätigte Rückstellventil 19 weiterhin in seiner nach rechts verschobenen Endlage bleibt. Da nunmehr die Drosselventile 8 und 9 ihre drosselwirksamen Lagen einnehmen, weil die Servoventilanordnung 12 in ihrer Mittellage steht, wird der vom Eingang 20 zum Ausgang 18 des Rückstellventiles 19 strömende Hydraulikstrom auf der in Fig. 1 rechten Seite des Servomotors 4 wirksam, d.h. dieser Hydraulikstrom bewirkt einen hydraulischen Druck, dessen Maß durch den Drosselwiderstand des Drosselventiles 9 bestimmt wird. Dieser Hydraulikdruck bewirkt, daß der Servomotor 4 eine die gelenkten Fahrzeugräder 1 in Richtung ihrer Geradeausstellung drängende Rückstellkraft erzeugt. Dementsprechend wird eine servounterstützte Rückstellung der Lenkung gewährleistet.

Sobald die gelenkten Fahrzeugräder 1 ihre Geradeausstellung erreichen, wird das Rückstellventil 19 in die in Fig. 1 dargestellte Mittellage zurückgestellt, mit der Folge, daß die vorgenannte Rückstellkraft abgeschaltet wird.

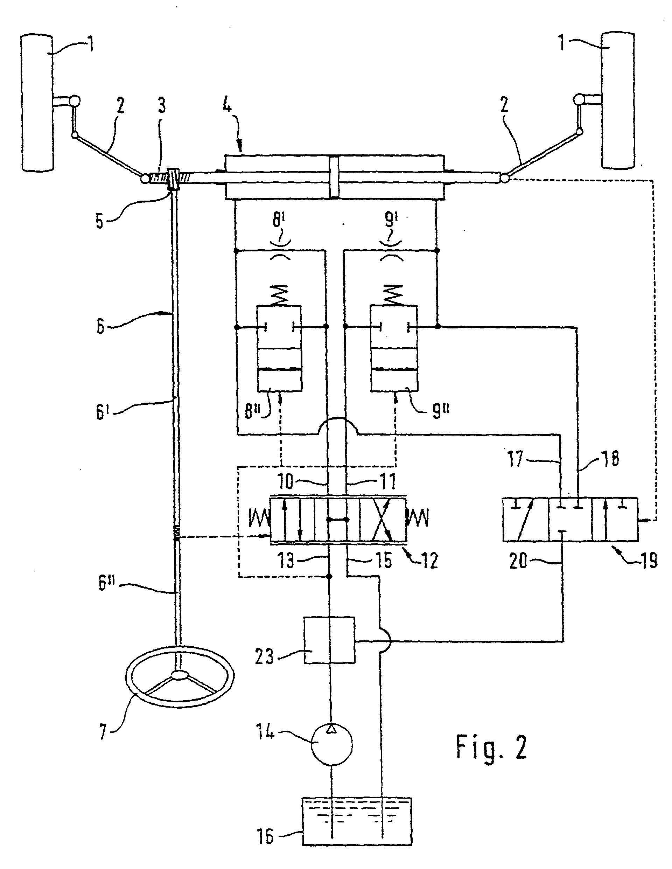

Die in Fig. 2 dargestellte Ausführungsform unterscheidet sich von der Ausführungsform der Fig. 1 zunächst dadurch, daß anstelle der Drosselventile 8 und 9 jeweils Drosselleitungen 8' und 9' mit dazu parallel angeordneten Absperrventilen 8" und 9" und vorgesehen sind. Wenn das Ventil 8" bzw. 9" seine Sperrlage einnimmt, wird die jeweilige Drossel 8' bzw. 9' wirksam. Bei geöffnetem Ventil 8" bzw. 9" ist die jeweilige Drossel 8' bzw. 9' unwirksam.

Im übrigen ist gemäß Fig. 2 vorgesehen, die Absperrventile 8" und 9", welche im Kombination mit den parallelen Drosseln 8' und 9' den Drosselventilen 8 und 9 der Fig. 1 entsprechen, in Abhängigkeit vom Druck am Eingang 13 der Servoventilanordnung 12 zu steuern. Dieser Druck ist vergleichsweise gering, wenn die Servoventilanordnung 12 die in Fig. 2 dargestellte Mittellage einnimmt. Wenn dagegen die Servoventilanordnung nach rechts oder links verstellt wird, steigt der Druck deutlich an, wobei oberhalb einer vorgegebenen Druckschwelle die Absperrventile 8" bzw. 9" (oder die statt dessen vorgesehenen Drosselvenile 8 und 9, vgl. Fig. 1) geöffnet werden.

Da die Verstellung der Servoventilanordnung aus der Mittellage in Abhängigkeit von den zwischen Lenkhandrad 7 und gelenkten Fahrzeugrädern 1 übertragenen Lenkkräften bzw. Lenkmomenten erfolgt, wird also im Ergebnis wiederum erreicht, daß zwischen den Motoranschlüssen 10 und 11 der Servoventilanordnung und dem Servomotor 4 jeweils Drosseln 8' bzw. 9' in Abhängigkeit von den vorgenannten Kräften und Momenten wirksam werden.

Schließlich ist nach Fig. 2 vorgesehen, anstelle des Stromregelventiles 21 in Fig. 1 ein Stromteilerventil 23 anzuordnen. Damit wird die Möglichkeit geboten, das Rückstellventil 19 als 3/3-Ventil mit einer vollständig geschlossenen Mitte auszubilden und auf einen Anschluß dieses Ventiles 19 für das Reservoir 16 zu verzichten.

Dies bietet den Vorzug, daß in der Mittellage des Rückstellventiles 19 über den Anschluß 20 kein Hydraulikmedium abströmen kann.

Im übrigen wirkt das System der Fig. 2 bei Lenkmanövern in grundsätzlich gleicher Weise wie das System der Fig. 1.

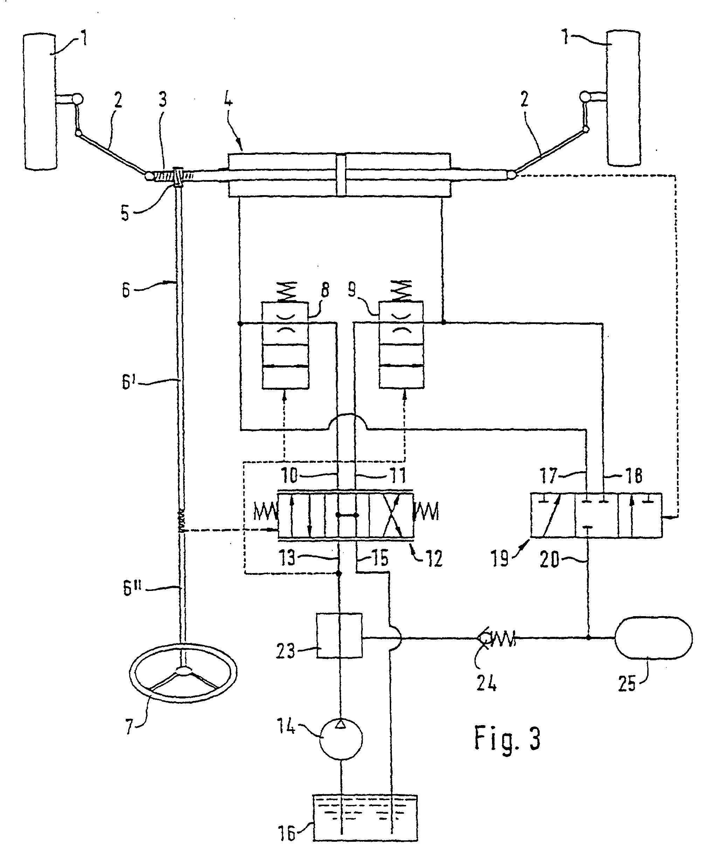

Die Ausführungsform der Fig. 3 unterscheidet sich von der Ausführungsform der Fig. 2 im wesentlichen dadurch, daß zwischen dem Rückstellventil 19 und dem Stromteilerventil 23 ein durch ein Rückschlagventil 24 gegen Entleerung in Richtung des Stromteilerventiles 23 gesicherter hydraulischer Druckspeicher 25 angeordnet ist. Dadurch können Druckschwankungen am Eingang 20 des Rückstellventiles 19 deutlich vermindert werden. Außerdem steht verzögerungsfrei ein hoher Druck zur Verfügung, wenn das Rückstellventil die dargestellte Sperrlage verläßt.

## Patentansprüche

1. Servolenkung für nicht spurgebundene Kraftfahrzeuge, mit
- einer Lenkhandhabe (7), insbesondere Lenkhandrad,
- damit zur Lenkverstellung gekoppelten gelenkten Fahrzeugrädern (1),
- einem mit den gelenkten Fahrzeugrädern zwangsgekoppelten, doppeltwirkenden, hydrostatischen Servomotor (4), insbesondere Kolben-Zylinder-Aggregat,
- einem relativ drucklosen Hydraulikreservoir (16),
- einer hydraulischen Druckquelle (14) und
- einer den Servomotor (4) steuernden Servoventilanordnung (12), welche einen mit der hydraulischen Druckquelle (14) verbundenen Druckanschluß (13), einen mit dem Hydraulikreservoir (16) verbundenen Niederdruckanschluß (15) sowie zwei mit jeweils einer Seite des Servomotors verbundene Motoranschlüsse (10,11) aufweist und in Abhängigkeit von Relativverstellungen zwischen der Lenkhandhabe (7) und den gelenkten Fahrzeugrädern (1) bzw. in Abhängigkeit von zwischen der Lenkhandhabe (7) und den gelenkten Fahrzeugrädern (1) übertragenen Lenkkräften aus einer Normallage, in der die Motoranschlüsse (10,11) drucklos bzw. mit dem Hydraulikreservoir (16) verbunden sind, verstellt wird, um zwischen den Motoranschlüssen (10,11) eine Druckdifferenz herzustellen, welche den Servomotor (4) zur Erzeugung einer das jeweilige Lenkmanöver unterstützenden Servokraft beaufschlagt, und
- jeweils einer steuerbaren Drossel (8,9;8',9') zwischen jedem Motoranschluß (10,11) und der daran angeschlossenen Seite des Servomotors,
**dadurch gekennzeichnet**,
**daß** die steuerbaren Drosseln (8,9;8',9') bei Betriebszuständen, in denen die Servoventilanordnung (12) zur Erzeugung der Druckdifferenz zwischen den Motoranschlüssen (10,11) verstellt wird, aus ihrem sonst eingenommenen drosselwirksamen Zustand in einen relativ drosselunwirksamen Zustand umgeschaltet wird, und
**daß** ein Rückstellventil (19) vorgesehen ist, welches bei Verlassen der Geradeausstellung der Lenkung einen hydraulischen Strom zu derjenigen Seite des Servomotors (4) freigibt, auf der bei hydraulischer Druckbeaufschlagung eine Stellkraft in Richtung der Geradeausstellung auftritt.

2. Servolenkung nach Anspruch 1,
**dadurch gekennzeichnet,**
**daß** die Servoventilanordnung (12) die Drosseln (8,9;8',9') steuert.

3. Servolenkung nach Anspruch 2,
**dadurch gekennzeichnet,**
**daß** die Drosseln (8, 9; 8', 9') mit der Servoventilanordnung (12) zwangsgekoppelt bzw. als Teil derselben ausgebildet sind.

4. Servolenkung nach Anspruch 1,
**dadurch gekennzeichnet,**
**daß** die Drosseln (8,9;8',9') in Abhängigkeit vom Druck am Druckanschluß (13) steuerbar sind.

5. Servolenkung nach einem der Ansprüche 1 bis 4,
**dadurch gekennzeichnet,**
**daß** der Eingang (20) des Rückstellventiles (19) mit der Druckquelle (14) über ein Stromregelventil (21) verbunden ist.

6. Servolenkung nach einem der Ansprüche 1 bis 4,
**dadurch gekennzeichnet,**
**daß** der Eingang (20) des Rückstellventiles (19) mit der Druckquelle (14) über ein Stromteilerventil (23) verbunden ist.

7. Servolenkung nach einem der Ansprüche 1 bis 6,
**dadurch gekennzeichnet,**
**daß** am Eingang (20) des Rückstellventiles (19) ein gegen Entleerung in Richtung der Servoventilanordnung (12) gesicherter hydraulischer Druckspeicher (25) angeordnet ist.

8. Servolenkung nach einem der Ansprüche 1 bis 7,
**dadurch gekennzeichnet,**
**daß** das Rückstellventil (19) bei Verlassen der Geradeausstellung der Lenkung mit jeweils einem Ausgang (17,18) unmittelbar an eine Seite des Servomotors (4) anschließt.

## Claims

1. Power-assisted steering for non-track-bound motor vehicles having
- a steering handle (7), in particular a steering wheel,
- steered vehicle wheels (1) coupled therewith to adjust the steering,
- a dual-acting, hydrostatic servo-motor (4) forcibly coupled with the steered vehicle wheels, in particular a piston-cylinder unit,
- a relatively pressureless hydraulic tank (16),
- a hydraulic pressure source (14) and,
- controlling the servo-motor (4), a servo-valve arrangement (12) which has a pressure connection (13) connected to the hydraulic source (14), a low-pressure connection (15) connected to the hydraulic tank (16) and two motor connections (10, 11) connected to a respective side of the servo-motor and is adjusted depending on the relative adjustments between the steering handle (7) and the steered wheels (1) or depending on the steering forces transmitted between the steering handle (7) and the steered wheels (1) out of a normal position in which the motor connectors (10,11) are pressureless or connected to the hydraulic tank (16), in order to generate a pressure differential between the motor connections (10, 11) which is applied to the servo-motor (4) to produce a servo-force to assist the respective steering manoeuvre, and
- respectively a controllable throttle (8,9; 8'9') between each motor connection (10, 11) and the side of the servo-motor connected thereto,
**characterised in that**
in operating states in which the servo-valve arrangement (12) is adjusted to produce the pressure differential between the motor connections (10, 11) , the controllable throttles (8, 9; 8' 9') are switched from the state which they normally assume when effecting a throttling action into a relatively ineffective throttling state, and
in that a return valve (19) is provided, which, when the steering leaves the straight-ahead position, releases a hydraulic flow to that side of the servo-motor (4) on which a positioning force in the direction of the straight-ahead position occurs when hydraulic pressure is applied.

2. Power-assisted steering as claimed in claim 1,
**characterised in that**
the servo-valve arrangement (12) controls the throttles (8, 9; 8' 9').

3. Power-assisted steering as claimed in claim 2,
**characterised in that**
the throttles (8, 9; 8' 9') are forcibly coupled with the servo-valve arrangement (12) or are designed as part thereof.

4. Power-assisted steering as claimed in claim 1,
**characterised in that**
the throttles (8, 9; 8' 9') are controllable depending on the pressure at the pressure connection (13).

5. Power-assisted steering as claimed in one of claims 1 to 4,
**characterised in that**
the inlet (20) of the return valve (19) is connected to the pressure source (14) via a flow regulator valve (21).

6. Power-assisted steering as claimed in one of claims 1 to 4,
**characterised in that**
the inlet (20) of the return valve (19) is connected to the pressure source (14) via a flow divider valve (23).

7. Power-assisted steering as claimed in one of claims 1 to 6,
**characterised in that**
a hydraulic pressure storage (25) is disposed at the inlet (20) of the return valve (19) to prevent emptying in the direction of the servo-valve arrangement (12).

8. Power-assisted steering as claimed in one of claims 1 to 7,
**characterised in that**
as the steering leaves the straight-ahead position, the return valve (19) connects respectively with an outlet (17, 18) immediately to one side of the servo-motor (4).

## Revendications

1. Servo-direction pour des véhicules automobiles non liés à une voie de circulation, comportant :
- une manette de direction (7), en particulier un volant,
- des roues de véhicule (1) articulées, lui étant couplées pour opérer une manoeuvre de pilotage directionnel,
- un servo-moteur (4) hydrostatique à double effet, soumis à un couplage forcé envers les roues articulées de véhicule, en particulier un groupe à piston-cylindre,
- un réservoir hydraulique (16) relativement sans pression,
- une source de pression hydraulique (14), et
- un agencement à valve d'asservissement (12) commandant le servo-moteur (4), qui présente un raccordement de pression (13) relié à la source de pression hydraulique (14), un raccordement basse pression (15) relié au réservoir hydraulique (16), ainsi que deux raccordement de moteur (10, 11) reliés chacun à un côté du servo-moteur et, en fonction des positions relatives entre la manette de direction (7) et les roues de véhicule (1) articulées ou en fonction de force de direction transmise entre la manette de direction (7) et les roues de véhicule (1) articulées et manoeuvrées, depuis une position normale, dans laquelle les raccordements de moteur (10, 11) sont sans pression ou sont reliées au réservoir hydraulique (16), afin d'établir entre les raccordements de moteur (10, 11) une différence de pression qui sollicite le servo-moteur (4) pour générer une force d'asservissement qui fournit une assistance à la manoeuvre directrice respective, et
- chaque fois un élément d'étranglement (8, 9; 8', 9') susceptible d'être commandé entre chaque raccordement de moteur (10, 11) et le côté, lui étant raccordé, du servo-moteur,
**caractérisée en ce que**
les étranglements (8, 9; 8', 9') susceptibles d'être commandés, pour des états de fonctionnement dans lesquels l'agencement à valve d'asservissement (12) est réglé pour générer la différence de pression entre les raccordements de moteur 10, 11), est commuté depuis son état à étranglement efficace qu'elle avait, en un état à étranglement relativement inefficace, et
**en ce qu'**est prévue une soupape de rappel (19) qui, en cas d'abandon de la position de roulage en ligne droite de la direction, libère un flux hydraulique allant au côté du servo-moteur (4) sur lequel, en cas de sollicitation en pression hydraulique, une force d'asservissement se produit dans la direction de la position de roulage en ligné droite.

2. Servo-direction selon la revendication 1,
**caractérisée en ce que**
le dispositif à valve d'asservissement (12) commande les éléments d'étranglement (8, 9; 8', 9').

3. Servo-direction selon la revendication 2,
**caractérisée en ce que**
les éléments d'étranglement (8, 9; 8', 9') sont soumis à un couplage forcé avec l'agencement à valve d'asservissement (12), ou bien font partie de celle-ci.

4. Servo-direction selon la revendication 1,
**caractérisée en ce que**
les éléments d'étranglement (8, 9; 8', 9') sont susceptibles d'être commandés en fonction de la pression au raccordement de pression (13).

5. Servo-direction selon l'une des revendications 1 à 4,
**caractérisée en ce que**
l'entrée (20) de la soupape de rappel (19) est reliée à la source de pression (14) par l'intermédiaire d'une soupape de régulation de débit (21).

6. Servo-direction selon l'une des revendications 1 à 4,
**caractérisée en ce que**
l'entrée (20) de la soupape de rappel (19) est reliée à la source de pression (14), par une soupape de division de débit (23).

7. Servo-direction selon l'une des revendications 1 à 6,
**caractérisée en ce qu'**
un accumulateur de pression (25) hydraulique, assuré contre tout vidage, dans la direction de l'agencement de la valve d'asservissement (12), est disposé à l'entrée (20) de la soupape de rappel (19).

8. Servo-direction selon l'une des revendications 1 à 7,
**caractérisée en ce que**,
lors de l'abandon de la position de roulage en ligne droite de la direction, la soupape de rappel (19) est raccordée respectivement à une sortie (17, 19) directement sur un côté du servo-moteur (4).
